Europäisches Patentamt

European Patent Office

Office européen des brevets

(11) Veröffentlichungsnummer: **0 312 947**

**A1**

## (12) EUROPÄISCHE PATENTANMELDUNG

(21) Anmeldenummer: 88117200.1

(22) Anmeldetag: 15.10.88

(51) Int. Cl.⁴: **B28D 1/06**

(30) Priorität: 17.10.87 DE 8713962 U

(43) Veröffentlichungstag der Anmeldung:
26.04.89 Patentblatt 89/17

(84) Benannte Vertragsstaaten:
DE ES GR

(71) Anmelder: **DIAMANT BOART Société Anonyme**
**Avenue du Pont de Luttre, 74**
**B-1190 Bruxelles(BE)**

(72) Erfinder: **Pöllmann, Josef**
**Griesstrasse 23**
**D-8590 Marktredwitz(DE)**
Erfinder: **Haag, Werner**
**Oskar-Loew-Strasse 7**
**D-8590 Marktredwitz(DE)**
Erfinder: **Hecht, Josef**
**Schwalbachweg 12**
**D-8596 Mitterteich(DE)**

(74) Vertreter: **Voigt, Günter, Dipl.-Ing. et al**
**Patentanwälte Dr. Schulze & Voigt Postfach**
**21 01 04 Nordring 152**
**D-8500 Nürnberg 21(DE)**

(54) **Sägemaschine zum Durchtrennen von Gesteins- oder Hartmaterialblöcken.**

(57) Es wird eine Sägemaschine zum Durchtrennen von Gesteins-oder Hartmaterialblöcken (13) beschrieben, bei der der Gesteins- oder Hartmaterialblock (13) auf Lamellen (12) ruht, die an ihren beiden Enden (15) in jeweils einer Aufnahmevorrichtung (16) mit Abstand zueinander gehalten und parallel ausgerichtet sowie auf einer Stützeinrichtung gleitfähig geführt sind, wobei die Aufnahmevorrichtungen (16) in an sich bekannten Quertraversen (17) eines Vorschubwagens gelagert sind.

## Sägemaschine zum Durchtrennen von Gesteins- oder Hartmaterialblöcken

Die Erfindung betrifft eine Sägemaschine zum Durchtrennen von Gesteins- oder Hartmaterialblöcken gemäß dem Oberbegriff des Anspruchs 1.

Der Relativbewegung zwischen einem zu zersägenden Gesteins- oder Hartmaterialblock und dem Sägeblatt-Träger, also der Vorschubbewegung, kommt eine wichtige Bedeutung für die Qualität des durchzuführenden Schnittes zu. Ungleichmäßigkeiten in der Vorschubbewegung oder Schwingungen des Werkstück- oder Werkzeugträgers während der Vorschubbewegung führen nämlich zu Einbußen in der Qualität der Schnittflächen.

Durch das DE-GM 1860024 ist eine Sägemaschine der eingangs genannten Art bekannt, bei der ein Hartmaterialblock mittels eines Vorschubschlittens bewegt wird, dessen Auflagefläche für den Block durch Lamellen gebildet wird, die sich zwischen den an den Enden des Vorschubschlittens vorgesehenen Quertraversen erstrecken. Durch wechselnde vertikale und im gewissen Umfang auch durch horizontale Komponenten der Schnittkräfte wird das vertikal nur an den Quertraversen unterstützte Lamellensystem mit dem aufliegenden Gesteins- oder Hartmaterialblock in Schwingungen versetzt und damit die Qualität der Schnittfläche beeinträchtigt.

Zudem ist eine sehr stabile Schlittenkonstruktion erforderlich, da diese lediglich außerhalb des Sägeblattsatzes auf Schienen abgestützt ist. Somit ist trotz stabiler Schlittenausbildung keine schwingunsarme Führung möglich.

Der Erfindung liegt die Aufgabe zugrunde, eine Sägemaschine so zu verbessern, daß mit einfachen Mitteln die Hartmaterialblöcke exakt geradlinig und schwingungsfrei bewegt werden können.

Die Lösung dieser Aufgabe erfolgt durch die im Anspruch 1 angegebenen Merkmale.

Vorteilhafte Weiterbildungen ergeben sich aus den Unteransprüchen.

Die Erfindung wird nachfolgend unter Bezugnahme auf die Zeichnungsfigur näher erläutert.

Auf einer Stützeinrichtung 10, die aus einer Vielzahl einzelner Stützflächen 11 aufgebaut ist, ist eine Mehrzahl von Lamellen 12 derart angeordnet, daß deren Rechteckquerschnitte aufrechtstehen, d.h. daß die Rechteckquerschnitte auf ihren Schmalseiten ruhen und ihre Längsseiten vertikal verlaufen. Auf einer Vielzahl solcher Lamellen 12 ruht direkt oder unter Zwischenschaltung einer Holzunterlage der unbearbeitete Gesteins- oder Hartmaterialblock 13. Um seine Standsicherheit zu erhöhen, kann er an mehreren Stellen über Gips- oder Zementbrücken 14 oder ähnliches mit den Lamellen 12 verbunden sein.

Die Lamellen 12 sind an ihren Enden 15 in einer Aufnahmevorrichtung 16 gelagert, die für die sichere Halterung und die parallele Ausrichtung der Lamellen 12 verantwortlich ist. Die an beiden Enden der Lamellen 12 vorhandenen Aufnahmevorrichtungen 16, die in an sich bekannter Weise einmal als Einhänge- und einmal als Spannvorrichtung ausgebildet sind, sind in an sich ebenfalls bekannten Quertraversen 17 eines nicht näher dargestellten Vorschubschlittens angeordnet.

Zwischen den einzelnen Lamellen 12 und den zugeordneten Stützflächen 11 sind parallel zu den Lamellen 12 verlaufende Längsschlitze 18 vorhanden, durch die Sägeblätter 19 eines Sägeblatt-Trägers während des Sägevorganges hindurchtreten können. Auf diese Weise kann der Sägeblatt-Träger mit den einzelnen Sägeblättern 19 an den Gesteins- oder Hartmaterialblock 13 herangeführt und der Sägevorgang eingeleitet und durchgeführt werden.

Es kann auch dort, wo die Sägeblatter 19 die Ebene der Stützeinrichtung 10 durchdringen, über die gesamte Breite der Stützeinrichtung 10 eine Aussparung vorgesehen werden.

In an sich bekannter Weise erfolgt während des Sägevorgangs eine Kühlmittelzufuhr. Um dieses Kühlmittel sowie die beim Bearbeitungsvorgang entstehenden Abtragungen möglichst ungehindert abfließen zu lassen, sind im wesentlichen quer zu den Lamellen 12 und den Längsschlitzen 18 verlaufende Abflußkanäle 20 vorhanden, die vorteilhafterweise ein für einen Abfluß ausreichendes Gefälle aufweisen.

Während der Vorschubbewegung bleibt der Gesteins- oder Hartmaterialblock 13 fest mit den Lamellen 12 verbunden. Eine Relativbewegung des Hartmaterialblocks 13 gegenüber den Lamellen 12 findet nicht statt. Der Gesteins- oder Hartmaterialblock 13 kann auch auf einem oder mehreren als Zwischenlage dienenden Holzbalken 22 gelagert und in Vorschubrichtung durch einen Block 23 aus Gips oder Zement abgestützt sein. Dieser Block 23 kann beispielsweise durch Hintergießen des Hartmaterialblocks 13 mit Gips oder Zement hergestellt werden. Die Lamellen 12 ihrerseits gleiten über die ihnen zugeordneten Stützflächen 11. Dieses Gleiten kann durch entsprechende Schmierung erleichtert werden. Die Stützflächen 11 können bei Bedarf als leicht austauschbare Verschleißteile gestaltet werden.

Bei der beschriebenen Gestaltung der Vorschubeinrichtung ist über fast die gesamte Länge der Lamellen 12 eine Auflage auf den Stützflächen 11 gewährleistet. Eine Durchbiegung der Lamellen 12 bzw. ein Vibrieren der Lamellen 12 unter wechselnden Vertikalkomponenten der Schnittkräfte werden vermieden. Die Reibungskräfte vermindern darüber hinaus auch die Horizontalschwingungen.

Lediglich dort, wo die Sägeblätter 19 die Ebene der Stützeinrichtung 10 durchdringen, haben die Lamellen keine Auflage. Dies führt jedoch nicht zu nachteiligen Nebenwirkungen und kann daher ohne weiteres akzeptiert werden. Die Auflageflächen für die Lamellen 12 können als austauschbare Verschleißteile ausgebildet und dann nach etwaigem Verschleiß problemlos ausgetauscht werden.

Bei Bedarf können auch zusätzliche Führungselemente 21 vorgesehen werden, die eine Zwangsführung für die Lamellen 12 bewirken.

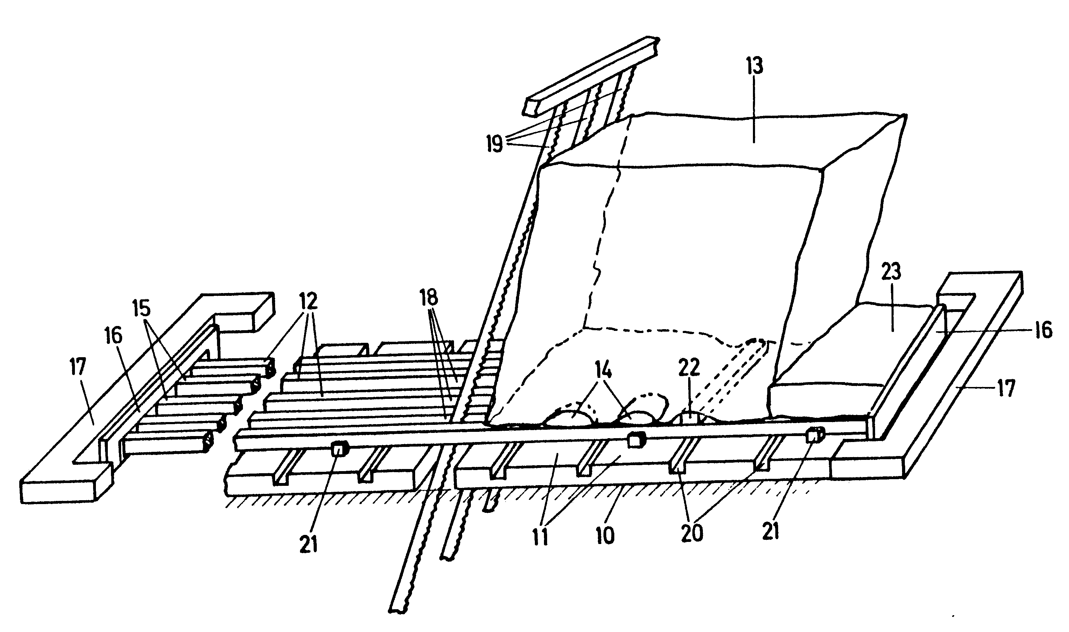

**Ansprüche**

1. Sägemaschine zum Durchtrennen von Gesteins- oder Hartmaterialblöcken mit einer Vorschubeinrichtung zur Erzeugung einer Relativbewegung zwischen einem Gesteins- oder Hartmaterialblock und einem Sägeblatt-Träger, die eine Mehrzahl den Gesteins- oder Hartmaterialblock tragender Lamellen aufweist, die an ihren beiden Enden an jeweils einer Quertraverse eines Vorschubschlittens mit Abstand zueinander gehalten und parallel ausgerichtet sind, dadurch gekennzeichnet, daß sämtliche Lamellen (12) auf einer Stützeinrichtung (10) gleitfähig geführt sind und an ihren Enden in einer Aufnahmevorrichtungen (16) in den Quertraversen (17) gelagert sind.

2. Sägemaschine nach Anspruch 1, dadurch gekennzeichnet, daß die Lamellen (12) einen aufrechtstehenden Rechteckquerschnitt aufweisen.

3. Sägemaschine nach Anspruch 1 oder 2, dadurch gekennzeichnet, daß die Lamellen (12) auf einer Vielzahl gleitfähiger Stützflächen (11) längsbeweglich gelagert sind.

4. Sägemaschine nach einem der Ansprüche 1 bis 3, dadurch gekennzeichnet, daß die Lamellen zusätzlich in Führungselementen (21) gelagert sind.

5. Sägemaschine nach Anspruch 3, dadurch gekennzeichnet, daß die Stützflächen (11) als austauschbare Verschleißteile ausgebildet sind.

6. Sägemaschine nach einem der Ansprüche 1 bis 5, dadurch gegekennzeichnet, daß im wesentlichen quer zu den Lamellen (12) verlaufende Abflußkanäle (20) für Abtragungen und Kühlflüssigkeit vorhanden sind.

7. Sägemaschine nach einem der Ansprüche 1 bis 6, dadurch gekennzeichnet, daß der Vorschubschlitten mindestens eine mit Gewindespindel arbeitende Antriebsvorrichtung aufweist.

8. Sägemaschine nach einem der Ansprüche 1 bis 6, dadurch gekennzeichnet, daß der Vorschubschlitten eine aus Zahnrad und Zahnstange bestehende Antriebsvorrichtung aufweist.

9. Sägemaschine nach einem der Ansprüche 1 bis 6, dadurch gekennzeichnet, daß der Vorschubschlitten mit einer Hydraulik-Antriebsvorrichtung versehen ist.

10 Sägemaschine nach einem der Ansprüche 1 bis 6, dadurch gekennzeichnet, daß der Vorschubschlitten in Bewegungsrichtung beidseitig mit Seilantrieben versehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-U-1 860 024 (ESTERER) <br> * Ansprüche; Figuren * <br> --- | 1-6 | B 28 D 1/06 |
| Y | FR-A-1 365 648 (ESTERER) <br> * Seite 2, rechte Spalte, Absatz 5; Figuren * <br> --- | 1-6 | |
| A | DE-A-3 236 403 (LISSMAC) <br> * Seite 17, letzter Absatz; Seite 18, Absatz 1; Figuren * <br> --- | 7-10 | |
| A | US-A-2 135 047 (CARPENTER) <br> --- | | |
| A | FR-A-2 377 260 (GRANITERIE PETITJEAN) <br> --- | | |
| A | BE-A- 511 097 (AUST) <br> ----- | | |

RECHERCHIERTE SACHGEBIETE (Int. Cl.4)

B 28 D

Der vorliegende Recherchenbericht wurde für alle Patentansprüche erstellt

| Recherchenort | Abschlußdatum der Recherche | Prüfer |
|---|---|---|
| DEN HAAG | 31-01-1989 | PEETERS S. |